# EUROPÄISCHE PATENTSCHRIFT

(11) **EP 3 945 380 B1**
(45) Veröffentlichungstag und Bekanntmachung des Hinweises auf die Patenterteilung: **28.09.2022**
(21) Anmeldenummer: 20188692.6
(22) Anmeldetag: 30.07.2020
(51) Int. Cl.: G05B 19/048

(54) **GEBÄUDEAUTOMATIONSANLAGE MIT EINEM GERÄT**
BUILDING AUTOMATION SYSTEM WITH A DEVICE
INSTALLATION D'AUTOMATISATION DE BÂTIMENT DOTÉ D'UN APPAREIL

(43) Veröffentlichungstag der Anmeldung: 02.02.2022
(73) Patentinhaber: GIRA GIERSIEPEN GmbH & Co. KG, 42477 Radevormwald (DE)
(72) Erfinder: SCHIMMELPFENNIG, Frank, 42477 Radevormwald (DE)
(74) Vertreter: Angerhausen, Christoph

(56) Entgegenhaltungen:
- US-A1- 2010 073 829

## Beschreibung

Die Erfindung betrifft eine Gebäudeautomationsanlage mit zumindest einer Türkommunikationsanlage mit zumindest einer Türstation, wobei das Gerät zumindest eine eine technische Besucherinteraktionsfunktion ausführende Funktionskomponente umfasst, eine Datenverarbeitungs- und Steuereinrichtung, welche zumindest eine in der Türkommunikationsanlage aufgenommene Elektronikkomponente umfasst, wobei die Datenverarbeitungs- und Steuereinrichtung und die Funktionskomponente in einem die Besucherinteraktionsfunktion betreffenden Datenaustausch stehen, sowie eine Temperaturerfassungseinrichtung zur mittel- oder unmittelbaren Erfassung einer Ist-Temperatur der zumindest einen Elektronikkomponente. Die Türkommunikationsanlage weist ferner eine Speichereinrichtung auf, in welcher zumindest ein Temperaturschwellwert hinterlegt ist, wobei bei Feststellung einer Überschreitung des Temperaturschwellwerts durch die gemessene Ist-Temperatur eine Minderung des Funktionsumfangs und/oder der Funktionsqualität der technischen Besucherinteraktionsfunktion, ausgelöst ist.

Türstationen von Türkommunikationsanlagen müssen oftmals aufgrund der Ausrichtung von Hauseingängen zwangsläufig so positioniert sein, dass sie direkter Sonneneinstrahlung ausgesetzt sind. Im Extremfall werden Anlagen im Außenbereich an Positionen installiert, in welchen diese unter voller Sonneneinstrahlung betriebsfähig sein müssen. Insbesondere in Gegenden in Äquatornähe, in denen die Sonneneinstrahlung besonders intensiv ist, kann dies dazu führen, dass Türstationen mehrere Stunden täglich bei Außentemperaturen jenseits von 40°C betrieben werden. Diese extreme Belastung kann sich auf die Lebensdauer der Geräte auswirken. Gleichzeitig wird von elektronischen Produkten eine immer höhere Leistungsfähigkeit verlangt. Die Verlustleistung der erforderlichen Hardware sorgt dafür, dass die Hardware eine hohe Eigenerwärmung erzeugt. Werden derartige Produkte im Sommer im Außenbereich betrieben, insbesondere unter direkter Sonneneinstrahlung, kann es dazu kommen, dass in Summe die Erwärmung durch Wärmeeintrag von außen und durch die Eigenerwärmung der Elektronik dazu führt, dass die zulässige Temperatur der Halbleiter überschritten wird, was zu Defekten oder zumindest zu geringerer Lebensdauer führt.

Aus der US 8,345,845 B2 ist beispielsweise eine Gegensprechanlage mit mehreren wasserdichten Abdeckungen bekannt, die lösbar über Rückwandausschnitten eines monolithischen Chassis befestigt sind. Es wird das Ziel verfolgt, eine wasser- und staubundurchlässige Gehäusestruktur bereitzustellen. Zur Wärmeabfuhr wird vorgeschlagen, das Gehäuse aus Aluminium herzustellen, um durch die hohe Wärmeleitfähigkeit einen Teil der Wärme durch die Gehäusewände nach außen abzuleiten. Das Gehäuse weist ferner Lamellen und ein Gebläse auf, welches Luft über die Lamellen bläst. Zur zusätzlichen Wärmeabfuhr wird ein Wärmeabfuhrsystem vorgeschlagen, das aus einem internen "sauberen" Lüfter und einem externen "schmutzigen" Lüfter besteht. Der interne Lüfter kann beispielsweise neben dem Strommodul angeordnet sein, das die größte Wärmeentwicklung verursacht. Der interne Lüfter saugt Luft von der Oberseite des Gehäuses an, um die Luft im Gehäuse gleichmäßig zu verteilen. Der externe Lüfter ist auf der Rückseite des Chassis auf einer Welle montiert, die von einem Motor im Inneren des Chassis durch die Rückwand des Chassis verläuft. Das externe Gebläse leitet die Luft über Kühlkörper auf der Rückseite einer oder mehrerer Modulplatten, die über den hinteren Ausschnitten des Chassis montiert sind.

Die Druckschrift US 10,445,999 B2 offenbart ein Türkommunikationssystem, welches ermöglicht, die Leistung von Türen und Reibungsniveaus über die Zeit zu verfolgen und den Systemnutzer dazu anregt, Türen besser zu warten. Das System verfolgt ferner das Ziel, ein falsches Entsperren des Systems zu verhindern, wenn ein Bewohner zuhause ist. Das System umfasst einen Motor 38, einen Leistungssensor 46 zur Überwachung des Motors sowie eine Schutzschaltung zum Schützen des Motors vor Überhitzung. Durch die zum Motor fließende Strommenge wird die Reibung bestimmt, die eine Tür 12 und/oder eine Verriegelungsvorrichtung 22 mit Schloss/Riegel 24 beim Öffnen und/oder Schließen erfährt.

Die DE 20 2011 110 280 U1 betrifft eine Türsprechanlage mit einer Schnittstelle zum Herstellen einer Kommunikationsverbindung zwischen der Türsprechanlage und einem externen Gerät, wobei die Türsprechanlage dem Gerät nach Herstellen der Kommunikationsverbindung ermöglicht, eine Konfiguration der Türsprechanlage zu ändern. Die Türsprechanlage weist als zuschaltbare Option auf, welche beispielsweise bei Abwesenheit des Bewohners oder automatisiert bei Abschließen der Haus- bzw. Wohnungstür als auslösendes Ereignis aktiviert werden kann, das Aufnehmen und Speichern eines Bildes einer sich der Türstation nähernden Person sowie das Weiterleiten des Bildes an das Telefon eines Bewohners.

Eine weitere Gebäudeautomationsanlage ist in der US 2010/0073829 A1 beschrieben.

Aus dem Stand der Technik ist keine Gebäudeautomationsanlage bekannt, welche temperaturabhängig den Funktionsumfang oder die Funktionsqualität einer Türstation der Gebäudeautomationsanlage steuert.

Es ist daher die Aufgabe der vorliegenden Erfindung, eine Gebäudeautomationsanlage derart weiterzuentwickeln, dass diese auch bei hoher thermischer Belastung eine lange Lebensdauer gewährleistet.

Die Aufgabe wird gelöst durch eine Gebäudeautomationsanlage mit den Merkmalen des unabhängigen Anspruchs 1.

Demgemäß wird eine Gebäudeautomationsanlage mit zumindest einer Türkommunikationsanlage mit zumindest einer Türstation, vorgeschlagen, wobei die Türkommunikationsanlage zumindest eine eine technische Besucherinteraktionsfunktion ausführende Funktionskomponente umfasst, eine Datenverarbeitungs- und Steuereinrichtung, welche zumindest eine in der Türkommunikationsanlage aufgenommene Elektronikkomponente umfasst, wobei die Datenverarbeitungs- und Steuereinrichtung und die Funktionskomponente in einem die Besucherinteraktionsfunktion betreffenden Datenaustausch stehen, sowie eine Temperaturerfassungseinrichtung zur mittel- oder unmittelbaren Erfassung einer Ist-Temperatur der zumindest einen Elektronikkomponente. Die Türkommunikationsanlage weist ferner eine Speichereinrichtung auf, in welcher zumindest ein Temperaturschwellwert hinterlegt ist, wobei bei Feststellung einer Überschreitung des Temperaturschwellwerts durch die gemessene Ist-Temperatur eine Minderung des Funktionsumfangs und/oder der Funktionsqualität der Besucherinteraktionsfunktion ausgelöst ist.

Die Besucherinteraktionsfunktion kann das Erzeugen von Bewegtbild- und/oder Tonaufnahmen des Besuches mittels einer Kamera als Funktionskomponente beinhalten. Ferner kann diese eine Befehlseingabe des Besuchers über eine Eingabeeinheit als Funktionskomponente, insbesondere ein Touch-Display, beinhalten. Alternativ kann das Display als einfaches Display ohne Touch-Funktion ausgebildet sein. Eine Ausgabeeinheit, insbesondere das Touch-Display, kann dem Besucher ferner Besucherinteraktionsinformation anzeigen. Ferner kann diese die Kommunikation des Besuchers mit dem Bewohner über einen Lautsprecher und oder ein Mikrofon als Funktionskomponenten beinhalten. Weiterhin kann die Besucherinteraktionsfunktion die Aufnahme eines biometrischen Merkmals des Besuchers beinhalten, beispielsweise über eine Biometriedatenerfassungseinheit wie beispielsweise eine Fingerabdruckerkennungseinheit und/oder eine Iriserkennungseinheit als Funktionskomponenten.

Die Funktionskomponente kann zumindest einen technischen Parameter aufweisen. Der Funktionsumfang und/oder die Funktionsqualität der Besucherinteraktionsfunktion kann durch die Anzahl der einer Funktionskomponente zugeordneten technischen Parameter bestimmt sein. Eine Minderung des Funktionsumfangs kann damit durch das Einschränken oder Abschalten einzelner Parameter bewirkt werden.

Die Elektronikkomponente kann einen Mikrocontroller umfassen. Der Mikrocontroller kann einen Grafikprozessor umfassen.

Der Datenaustausch kann insbesondere Datenformate umfassen, welche durch die Funktionskomponente jeweils bestimmt werden. Der Datenaustausch kann Leistungs- und/oder Informations-und/oder Steuerungsdaten betreffen. Die Temperaturerfassungseinrichtung kann einen Temperatursensor aufweisen. Der Temperatursensor kann unmittelbar auf dem Mikrocontroller angeordnet sein.

Die Speichereinrichtung kann in dem Gerät aufgenommen sein. Alternativ kann die Speichereinrichtung in einer weiteren Komponente der Gebäudeautomationsanlage, insbesondere der Türkommunikationsanlage, wie beispielsweise einer Wohnungsstation, aufgenommen sein. Die Speicherfunktion kann in einer Datenverbindung mit der Datenverarbeitungs- und Steuereinrichtung stehen.

Die Gebäudeautomationsanlage, insbesondere Türkommunikationsanlage, kann ferner eine Benutzerschnittstelle aufweisen, über welche der Grad der Funktionsumfangsminderung zwischen einem Minimalwert und einem Maximalwert einstellbar ist.

Insbesondere kann die Einstellmöglichkeit vorsehen, dass einem Benutzer der Gebäudeautomationsanlage, insbesondere Türkommunikationsanlage, eine, insbesondere graduelle, Auswahlmöglichkeit zwischen den beiden Extremwerten "maximaler Funktionsumfang" und "maximale Lebensdauer" bereitgestellt wird. Mit jedem Einstellungsgrad werden unterschiedliche Power-Down-Varianten verknüpft, mit denen sukzessive die Leistung der Anlage verringert oder der Funktionsumfang minimiert werden. Bei Auswahl der maximalen Lebensdauer wird dabei bereits bei geringfügig kritischen Temperaturen, das heißt, einem niedrig ausgewählten Temperaturschwellwert, die Türstation in einem Notbetrieb gefahren, bei welchem nur die für das Ausführen der essentiellen Funktionen der Türstation notwendigen Funktionskomponenten betrieben werden, wie insbesondere die Möglichkeit für einen Besucher, die Klingel zu bedienen. Durch das Herabregeln der Anlage schon bei geringen Temperaturen wird erreicht, dass die Türstation weniger Eigenwärme erzeugt und dadurch die Elektronikkomponenten vor Überhitzung geschützt sind, was zu einer deutlich höheren Lebensdauer führt. Entscheidet sich ein Benutzer für die Einstellung "Maximaler Funktionsumfang und maximale Leistung", wird demgegenüber ein möglichst hoher Temperaturwert als Schwellwert benutzt.

Von PCs ist zwar bekannt, dass diese bei Gefahr der Überhitzung die Display-Helligkeit senken und ggf. auch die Taktraten von CPU, Grafikkarte etc. Der Benutzer hat aber keinen Einfluss auf die vollautomatisch ablaufenden Leistungsverringerungen. Die Türstation weist demgegenüber den Vorteil auf, dass ein Benutzer, sofern er mit der Voreinstellung nicht zufrieden ist, die Möglichkeit hat, das Produkt entweder in Richtung Performance und Funktionsumfang oder in Richtung Lebensdauer zu optimieren.

Dem zumindest einen Temperaturschwellwert kann zumindest eine spezifische Funktionsumfangsminderung zugeordnet sein. Dies kann insbesondere bedeuten, dass bei Überschreiten des Temperaturschwellwerts einer oder mehrere Parameter einer oder mehrerer Funktionskomponenten heruntergeregelt oder eine oder mehrere Funktionskomponenten abgeschaltet werden.

In der Speichereinrichtung können ferner mehrere voneinander verschiedene Temperaturschwellwerte hinterlegt sein, welchen jeweils zumindest eine spezifische Funktionsumfangsminderung zugeordnet ist. Durch das Hinterlegen mehrerer Temperaturschwellwerte können beispielsweise zunächst weniger relevante Funktionen heruntergeregelt oder abgeschaltet werden. Alternativ ist denkbar, dass zunächst jene Funktionen, die den größten Temperatureintrag in die Elektronikkomponente bewirken, abgeschaltet werden.

Den einzelnen Funktionsumfangsminderungen kann jeweils ein spezifischer in der Speichereinrichtung hinterlegter Temperatureintrag in die Elektronikkomponente zugeordnet sein, wobei dem niedrigsten Temperaturschwellwert zumindest die spezifische Funktionsumfangsminderung mit dem größten Temperatureintrag und dem höchsten Temperaturschwellwert zumindest die spezifische Funktionsumfangsminderung mit dem niedrigsten Temperatureintrag zugeordnet sein kann. Somit können sukzessive diejenigen Funktionen mit dem jeweils nächstkleineren Temperatureintrag abgeschaltet oder heruntergeregelt werden. Somit können in der Speichereinrichtung die einstellbaren Funktionsparameter samt der Information ihres spezifischen Temperatureintrags bzw. Wärmeeinflusses auf die Elektronikkomponente hinterlegt sein.

Den einzelnen Funktionsumfangsminderungen kann alternativ jeweils ein spezifischer in der Speichereinrichtung hinterlegter Relevanzfaktor zugeordnet sein, wobei dem niedrigsten Temperaturschwellwert zumindest die spezifische Funktionsumfangsminderung mit dem niedrigsten Relevanzfaktor und dem höchsten Temperaturschwellwert zumindest die spezifische Funktionsumfangsminderung mit dem größten Relevanzfaktor zugeordnet sein kann. Somit können sukzessive diejenigen Funktionen mit dem jeweils nächstgrößeren Relevanzfaktor abgeschaltet oder heruntergeregelt werden. Somit können in der Speichereinrichtung die einstellbaren Funktionsparameter samt der Information ihres spezifischen Relevanzfaktors für die Besucherinteraktion hinterlegt sein.

Den zwischen dem niedrigsten und dem höchsten Temperaturschwellwert liegenden Temperaturschwellwerten können in aufsteigender Weise jeweils spezifische Funktionsumfangsminderungen mit abnehmendem Temperatureintrag zugeordnet sein.

Den zwischen dem niedrigsten und dem höchsten Temperaturschwellwert liegenden Temperaturschwellwerten können alternativ in aufsteigender Weise jeweils spezifische Funktionsumfangsminderungen mit zunehmendem Relevanzfaktor zugeordnet sein.

Die Funktionsumfangsminderung kann das Verringern der Leistungsaufnahme oder Abschalten der Funktionskomponente umfassen. Es ist auch denkbar, dass die Funktionsumfangsminderung das Abschalten eines benachbarten Moduls umfasst. Dies führt dann zu dessen Abkühlung und ermöglicht damit einen Wärmefluss von anderen, weiter eingeschalteten Komponenten in Richtung der niedrigeren Temperatur beziehungsweise des abgeschalteten Moduls. Dadurch werden die weiterhin eingeschalteten Elektronikkomponenten vor Überlastung geschützt.

Die Funktionsumfangsminderung kann ferner eine Verringerung des Datenaustauschs zwischen der Funktionskomponente und der Datenverarbeitungs- und Steuereinrichtung umfassen.

Die Funktionsumfangsminderung kann außerdem eine Verringerung der Leistungsaufnahme der Elektronikkomponente umfassen.

Die zumindest eine Funktionskomponente kann eine Kamera und/oder ein Touch-Display und/oder einen Lautsprecher und/oder ein Mikrofon und/oder eine Klingel und/oder eine Biometrieerfassungseinrichtung umfassen.

Das Touch-Display kann als technisch einstellbare Parameter die Display-Helligkeit, die Auflösung des Displays oder die Bildwiederholfrequenz umfassen. Die Kamera kann als Parameter die aufgenommenen Bilder pro Sekunde umfassen. Ferner kann die Elektronikkomponente als einstellbare Parameter die Taktrate der CPU und/oder der Grafikkarte umfassen. Beispielsweise können im Speicher einer oder mehrere Temperaturschwellwerte hinterlegt sein, ab der die Hintergrundbeleuchtung des Displays abgedimmt wird, ab der die Taktfrequenz der CPU verringert wird, ab der die Auflösung des Bildschirms verringert wird oder, ab der die Anzahl aufgenommener Bilder pro Sekunde gesenkt wird.

In der Speichereinrichtung kann ein ab Werk voreingestellter mittlerer Temperaturschwellwert hinterlegt sein. Dies kann ein im Auslieferungszustand auf einen vom Hersteller als in den meisten Installationsfällen sinnvoll erachteter Wert sein.

Bei Feststellung einer Unterschreitung des zumindest einen Temperaturschwellwerts durch die gemessene Ist-Temperatur kann eine Wiederherstellung des unterhalb der Schwelle bereitgestellten Funktionsumfangs und/oder der Funktionsqualität der technischen Besucherinteraktionsfunktion erfolgen.

Die Türkommunikationsanlage kann ferner eine Wohnungsstation aufweisen, in welcher die Benutzerschnittstelle angeordnet ist.

Die Benutzerschnittstelle kann eine grafische Benutzerschnittstelle sein.

Der Temperaturschwellwert kann über einen Dreh- oder Schieberegler einstellbar sein.

Weitere Eigenschaften, Vorteile und Merkmale der Erfindung sind in der folgenden Beschreibung bevorzugter Ausführungen der Erfindung anhand der beiliegenden Zeichnungen erkennbar, in denen zeigen:
- Fig. 1: eine Ausführungsform einer Türstation;
- Fig. 2: eine Ausführungsform einer grafischen Benutzerschnittstelle.

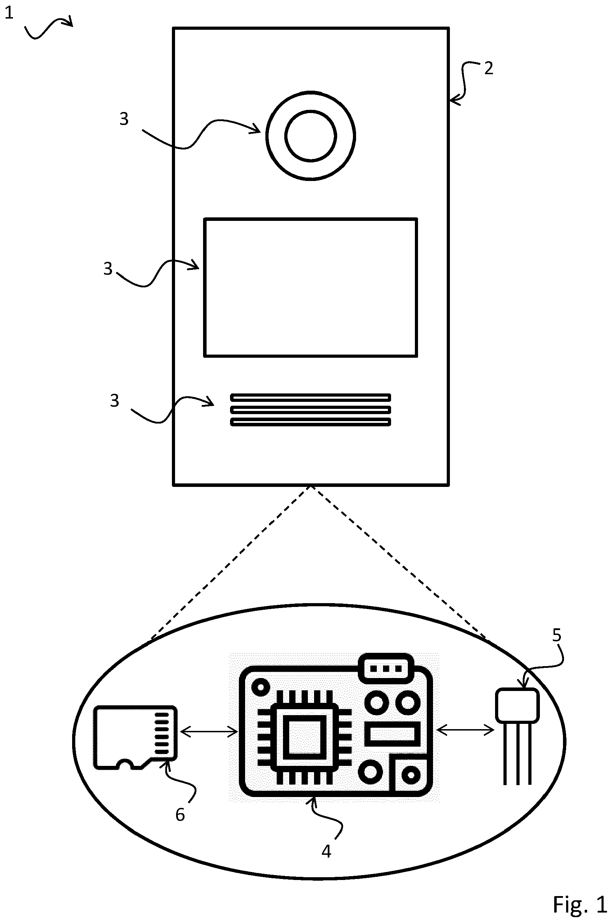

Figur 1 zeigt eine Türkommunikationsanlage 1 mit einer Türstation 2, welche eine Mehrzahl Funktionskomponenten 3 aufweist, welche jeweils dazu eingerichtet sind, zumindest eine technische Besucherinteraktionsfunktion auszuführen. Beispielhaft umfasst die dargestellte Türstation 2 eine Kamera, ein Touch-Display sowie eine Sprecheinrichtung aufweisend einen Lautsprecher sowie ein Mikrofon. In der Türstation 2 aufgenommen ist ferner eine Elektronikkomponente 4 in Form eines Microcontrollers, auf welchem zumindest ein Temperatursensor 5 zum Erfassen von Ist-Temperaturen der temperaturkritischen Bauteile wie zumindest einer Prozessoreinheit angeordnet ist. Die Elektronikkomponente 4 ist Teil einer Datenverarbeitungs- und Steuereinrichtung der Türkommunikationsanlage. Sie dient zur Ansteuerung der Funktionskomponenten 3, zur Verarbeitung und Umsetzung von über die Funktionskomponenten 3 erhaltenen Befehlseingaben sowie zur Verarbeitung der von den Funktionskomponenten 3 erhaltenen Besucherinteraktionsinformationen. Außerdem ist in der Türstation eine Speichereinheit 6 aufgenommen.

Der Temperatursensor 5 erfasst kontinuierlich oder in regelmäßigen Abständen die Ist-Temperatur der Elektronikkomponente. Die erfasste Ist-Temperatur wird dann mit in der Speichereinheit 6 hinterlegten Temperaturschwellwerten abgeglichen. Bei Feststellung einer Überschreitung eines hinterlegten Temperaturschwellwerts werden der jeweiligen Temperaturschwellwertüberschreitung zugeordnete Funktionsparameter einer oder mehrerer Funktionskomponenten 3 heruntergeregelt oder eine oder mehrere Funktionskomponenten 3 abgeschaltet. Dabei können auch Teilfunktionen unterschiedlicher Funktionskomponenten 3 heruntergeregelt werden. Bei Überschreitung eines weiteren Temperaturschwellwerts werden weitere Funktionseinschränkungen vorgenommen. Wird bei einem nachfolgenden Temperaturabgleich festgestellt, dass die Ist-Temperatur wieder unter den überschrittenen Temperaturschwellwert gefallen ist, werden die entsprechenden Funktionen wieder aktiviert. Einem ersten Temperaturschwellwert kann beispielsweise die Bildschirmauflösung sowie die Taktrate der CPU des Mikrocontrollers zugeordnet sein, welche bei Überschreitung des Temperaturschwellwerts heruntergeregelt werden. Einem zweiten Temperaturschwellwert kann beispielsweise die Bildaufnahmerate der Kamera sowie die Bildschirmhelligkeit zugeordnet sein, welche bei Überschreitung des zweiten Temperaturschwellwerts heruntergeregelt werden. Einem weiteren Temperaturschwellwert kann beispielsweise erneut die Bildschirmauflösung sowie die Bildschirmhelligkeit Mikrocontrollers zugeordnet sein, wobei bei Überschreitung des Temperaturschwellwerts diese um einen größeren Wert als bei der ersten Überschreitung heruntergeregelt werden. Werkseitig wird dabei ein oder werden dabei mehrere Temperaturschwellwerte von vornherein festgelegt, welche für eine mittlere Lebensdauer der Anlage und eine mittlere Herunterregelung von Funktionen für sinnvoll erachtet werden.

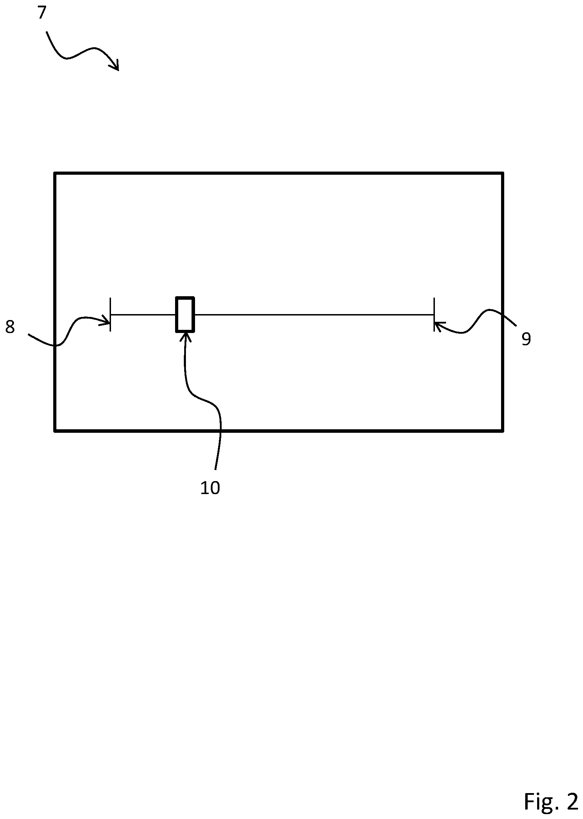

Über das Justieren eines über die Besucherschnittstelle 7 bereitgestellten Reglers 10, wie Figur 2 zeigt, kann ein Benutzer sich zwischen einem Minimalwert 8 und einem Maximalwert 9 entscheiden, oder eine dazwischen befindliche Zwischenposition wählen. Bei einem Minimalwert 8 geht die Anlage maximal schonend mit den in ihr aufgenommenen Elektronikkomponenten 4 um, so dass einerseits die Temperaturschwelle oder -schwellen auf niedrige Werte eingestellt sind und andererseits bereits mit niedrigen Temperaturschwellen ein großer Funktionsumfang eingeschränkt wird. Im Minimalbetrieb kann bei Überschreiten der höchsten in der Speichereinheit 6 hinterlegten Temperaturschwelle die Anlage so betrieben werden, dass nur noch die essentiellen Funktionen der Türstation bereitgestellt sind, wie beispielsweise die Klingel. Wenn demgegenüber der Regler 10 auf einen Maximalwert 9 eingestellt ist, sind zum einen die Temperaturschwellwerte hoch angesetzt und gegebenenfalls feiner unterteilt, was bedeutet, dass in der Maximaleinstellung mehr Temperaturschwellwerte berücksichtigt werden können. Zum anderen erfolgt im Maximalbetrieb 9 das Einschränken des Funktionsumfangs erst bei höheren Temperaturen, beziehungsweise werden selbst bei sehr hohen Temperaturen Funktionen weiterhin bereitgestellt, sofern dies nicht zu einem sofortigen Ausfall der Anlage führt. In der Speichereinheit sind somit verschiedene Modi der Türstation hinterlegt, wobei für jede stufenweise Einstellmöglichkeit des Reglers 10 ein Modus hinterlegt ist. Zu jedem Modus ist eine bestimmte Anzahl an Temperaturschwellwerten hinterlegt sowie deren spezifische Werte. Zu jedem der Temperaturschwellwerte sind schließlich spezifische Funktionsumfangsminderungen oder -einschränkungen hinterlegt.

Die grafische Benutzerschnittstelle 7 kann beispielsweise in einem dem Gerät im Außenbereich zugeordnetes Gerät im Inneren des Gebäudes vorgesehen sein, zum Beispiel in einer Wohnungsstation der Türkommunikationsanlage 1. Der Regler 10 kann beispielsweise als Schieberegler ausgeführt sein. Es ist auch denkbar, dass die Parametrierung von Ferne passiert: Über ein Mobiltelefon oder ein entsprechendes als Fernsteuerung einsetzbares Gerät.

### Bezugszeichenliste

- 1: Türkommunikationsanlage
- 2: Türstation
- 3: Funktionskomponente
- 4: Elektronikkomponente
- 5: Temperaturerfassungseinrichtung
- 6: Speichereinrichtung
- 7: Benutzerschnittstelle
- 8: Minimalwert
- 9: Maximalwert
- 10: Schieberegler

## Patentansprüche

1. Gebäudeautomationsanlage mit zumindest einer Türkommunikationsanlage (1) mit zumindest einer Türstation (2), welche umfasst:
- zumindest eine eine technische Besucherinteraktionsfunktion ausführende Funktionskomponente (3),
- eine Datenverarbeitungs- und Steuereinrichtung, welche zumindest eine in der Türkommunikationsanlage (1) aufgenommene Elektronikkomponente (4) umfasst, wobei die Datenverarbeitungs- und Steuereinrichtung und die Funktionskomponente (3) in einem die Besucherinteraktionsfunktion betreffenden Datenaustausch stehen,
- eine Temperaturerfassungseinrichtung (5) zur mittel- oder unmittelbaren Erfassung einer Ist-Temperatur der zumindest einen Elektronikkomponente (4),
wobei die Türkommunikationsanlage (1) eine Speichereinrichtung (6) aufweist, in welcher zumindest ein Temperaturschwellwert hinterlegt ist,
wobei bei Feststellung einer Überschreitung des Temperaturschwellwerts durch die gemessene Ist-Temperatur eine Minderung des Funktionsumfangs und/oder der Funktionsqualität der technischen Besucherinteraktionsfunktion ausgelöst ist.

2. Gebäudeautomationsanlage nach Anspruch 1, welche ferner eine Benutzerschnittstelle (7) aufweist, über welche der Grad der Funktionsumfangsminderung zwischen einem Minimalwert (8) und einem Maximalwert (9) einstellbar ist.

3. Gebäudeautomationsanlage nach Anspruch 1 oder 2, wobei dem zumindest einen Temperaturschwellwert zumindest eine spezifische Funktionsumfangsminderung zugeordnet ist.

4. Gebäudeautomationsanlage nach einem der vorangehenden Ansprüche, wobei in der Speichereinrichtung (6) mehrere voneinander verschiedene Temperaturschwellwerte hinterlegt sind, welchen jeweils zumindest eine spezifische Funktionsumfangsminderung zugeordnet ist.

5. Gebäudeautomationsanlage nach Anspruch 4, wobei den einzelnen Funktionsumfangsminderungen jeweils ein spezifischer in der Speichereinrichtung (6) hinterlegter Temperatureintrag in die Elektronikkomponente (4) zugeordnet ist, wobei dem niedrigsten Temperaturschwellwert zumindest die spezifische Funktionsumfangsminderung mit dem größten Temperatureintrag und dem höchsten Temperaturschwellwert zumindest die spezifische Funktionsumfangsminderung mit dem niedrigsten Temperatureintrag zugeordnet ist.

6. Gebäudeautomationsanlage nach Anspruch 5, wobei den zwischen dem niedrigsten und dem höchsten Temperaturschwellwert liegenden Temperaturschwellwerten in aufsteigender Weise jeweils spezifische Funktionsumfangsminderungen mit abnehmendem Temperatureintrag zugeordnet sind.

7. Gebäudeautomationsanlage nach einem der vorangehenden Ansprüche, wobei die Funktionsumfangsminderung das Verringern der Leistungsaufnahme oder Abschalten der Funktionskomponente (3) umfasst.

8. Gebäudeautomationsanlage nach einem der vorangehenden Ansprüche, wobei die Funktionsumfangsminderung eine Verringerung des Datenaustauschs zwischen der Funktionskomponente (3) und der Datenverarbeitungs- und Steuereinrichtung umfasst.

9. Gebäudeautomationsanlage nach einem der vorangehenden Ansprüche, wobei die Funktionsumfangsminderung eine Verringerung der Leistungsaufnahme der Elektronikkomponente (4) umfasst.

10. Gebäudeautomationsanlage nach einem der vorangehenden Ansprüche, wobei die zumindest eine Funktionskomponente (3) eine Kamera und/oder ein Touch-Display und/oder einen Lautsprecher und/oder ein Mikrofon und/oder eine Klingel und/oder eine Biometrieerfassungseinrichtung umfasst.

11. Gebäudeautomationsanlage nach einem der vorangehenden Ansprüche, wobei in der Speichereinrichtung (6) ein ab Werk voreingestellter mittlerer Temperaturschwellwert hinterlegt ist.

12. Gebäudeautomationsanlage nach einem der vorangehenden Ansprüche, wobei bei Feststellung einer Unterschreitung des zumindest einen Temperaturschwellwerts durch die gemessene Ist-Temperatur eine Wiederherstellung des unterhalb der Schwelle bereitgestellten Funktionsumfangs und/oder der Funktionsqualität der technischen Funktion, insbesondere Besucherinteraktionsfunktion, erfolgt.

13. Gebäudeautomationsanlage nach einem der vorangehenden Ansprüche, welche ferner eine Wohnungsstation aufweist, in welcher die Benutzerschnittstelle (7) angeordnet ist.

14. Gebäudeautomationsanlage nach einem der vorangehenden Ansprüche, wobei die Benutzerschnittstelle (7) eine grafische Benutzerschnittstelle ist.

15. Gebäudeautomationsanlage nach einem der vorangehenden Ansprüche, wobei der Temperaturschwellwert über einen Dreh- oder Schieberegler (10) einstellbar ist.

## Claims

1. A building automation system with at least one door communication system (1) having at least one door station (2), wherein the building automation system comprises:
- at least one functional component (3) performing a technical visitor interaction function,
- a data processing and control device comprising at least one electronic component (4) accommodated in the door communication system (1), wherein the data processing and control device and the functional component (3) are in a data exchange relating to the visitor interaction function,
- a temperature detection device (5) for medium or direct detection of an actual temperature of the at least one electronic component (4),
wherein the door communication system (1) has a memory device (6) in which at least one temperature threshold value is stored,
wherein a reduction in the functional scope and/or functional quality of the technical visitor interaction function is triggered when the measured actual temperature exceeds the temperature threshold.

2. The building automation system according to claim 1, further comprising a user interface (7) through which the degree of functional scope reduction is adjustable between a minimum value (8) and a maximum value (9).

3. The building automation system according to claim 1 or 2, wherein at least one specific functional scope reduction is assigned to the at least one temperature threshold value.

4. The building automation system according to one of the preceding claims, wherein a plurality of mutually different temperature threshold values are stored in the memory device (6), to each of which at least one specific function scope reduction is assigned.

5. The building automation system according to claim 4, wherein a specific temperature entry stored in the memory device (6) in the electronic component (4) is assigned to each of the individual functional scope reductions, wherein at least the specific functional scope reduction with the greatest temperature entry is assigned to the lowest temperature threshold and at least the specific functional scope reduction with the lowest temperature entry is assigned to the highest temperature threshold.

6. The building automation system according to claim 5, wherein the temperature threshold values lying between the lowest and the highest temperature threshold value are each assigned specific function scope reductions with decreasing temperature input in an ascending manner.

7. The building automation system according to any one of the preceding claims, wherein the function scope reduction comprises reducing the power consumption or switching off the functional component (3).

8. The building automation system according to any one of the preceding claims, wherein the functional scope reduction comprises a reduction of the data exchange between the functional component (3) and the data processing and control device.

9. The building automation system according to any one of the preceding claims, wherein the functional scope reduction comprises reducing the power consumption of the electronic component (4).

10. The building automation system according to any one of the preceding claims, wherein the at least one functional component (3) comprises a camera and/or a touch display and/or a loudspeaker and/or a microphone and/or a bell and/or a biometrics detection device.

11. The building automation system according to one of the preceding claims, wherein a factory preset average temperature threshold value is stored in the storage device (6).

12. The building automation system according to one of the preceding claims, wherein, when it is determined that the measured actual temperature falls below the at least one temperature threshold, the functional scope provided below the threshold and/or the functional quality of the technical function, in particular visitor interaction function, is restored.

13. The building automation system according to any one of the preceding claims, further comprising an apartment station in which the user interface (7) is arranged.

14. The building automation system according to any one of the preceding claims, wherein the user interface (7) is a graphical user interface.

15. The building automation system according to one of the preceding claims, wherein the temperature threshold value can be set via a rotary or slider controller (10).

## Revendications

1. Installation de domotique avec au moins une installation de communication de porte (1) avec au moins une station de porte (2), qui comprend :
- au moins un composant fonctionnel (3) exécutant une fonction technique d'interaction avec les visiteurs,
- un dispositif de traitement des données et de commande qui comprend au moins un composant électronique (4) logé dans l'installation de communication de porte (1), dans lequel le dispositif de traitement des données et de commande et le composant fonctionnel (3) sont dans un échange de données concernant la fonction d'interaction avec les visiteurs,
- un dispositif de mesure de température (5) pour la mesure indirecte ou directe d'une température effective de l'au moins un composant électronique (4),
dans laquelle l'installation de communication de porte (1) comprend un dispositif d'enregistrement (6) dans lequel est enregistrée au moins une valeur seuil de température,
dans laquelle, lors de la constatation d'un dépassement de la valeur seuil de température par la température effective mesurée, une réduction de l'étendue des fonctions et/ou de la qualité des fonctions de la fonction d'interaction avec les visiteurs est déclenchée.

2. Installation de domotique selon la revendication 1, qui comprend en outre une interface utilisateur (7) par l'intermédiaire de laquelle le degré de réduction de l'étendue des fonctions peut être réglé entre une valeur minimale (8) et une valeur maximale (9).

3. Installation de domotique selon la revendication 1 ou 2, dans laquelle, à l'au moins une valeur seuil de température, correspond au moins une réduction spécifique de l'étendue des fonctions.

4. Installation de domotique selon l'une des revendications précédentes, dans laquelle, dans le dispositif d'enregistrement (6), sont enregistrés plusieurs valeurs seuils de température indépendantes entre elles, à chacune desquelles correspond au moins une réduction spécifique de l'étendue des fonctions.

5. Installation de domotique selon la revendication 4, dans laquelle, à chacune des réductions de l'étendue des fonctions, correspond, dans le composant électronique (4), une entrée de température spécifique enregistrée dans le dispositif d'enregistrement (6), dans lequel, à la valeur seuil de température la plus basse correspond au moins la réduction spécifique de l'étendue des fonctions avec l'entrée de température la plus élevée et, à la valeur seuil de température la plus élevée correspond au moins la réduction spécifique de l'étendue des fonctions avec l'entrée de température a plus basse.

6. Installation de domotique selon la revendication 5, dans laquelle, aux valeurs seuils de température se trouvant entre la valeur seuil de température la plus basse et la valeur seuil de température la plus élevée, correspondent, de manière croissante, des réductions spécifiques de l'étendue des fonctions avec une entrée de température décroissante.

7. Installation de domotique selon l'une des revendications précédentes, dans laquelle la réduction de l'étendue des fonctions comprend la réduction de la consommation de puissance ou un arrêt du composant fonctionnel (3).

8. Installation de domotique selon l'une des revendications précédentes, dans laquelle la réduction de l'étendue des fonctions comprend une réduction de l'échange de données entre le composant fonctionnel (3) et le dispositif de traitement de données et de commande.

9. Installation de domotique selon l'une des revendications précédentes, dans laquelle la réduction de l'étendue des fonctions comprend une réduction de la consommation de puissance du composant électronique (4).

10. Installation de domotique selon l'une des revendications précédentes, dans laquelle l'au moins un composant fonctionnel (3) comprend une caméra et/ou un écran tactile et/ou un haut-parleur et/ou un microphone et/ou une sonnette et/ou un dispositif de mesure biométrique.

11. Installation de domotique selon l'une des revendications précédentes, dans laquelle, dans le dispositif d'enregistrement (6), est enregistrée une valeur seuil de température moyenne pré-réglée en usine.

12. Installation de domotique selon l'une des revendications précédentes, dans laquelle, lors de la constatation d'un passage de la température en dessous de l'au moins une valeur seuil de température par la température effective mesurée, a lieu une restauration de l'étendue des fonctions et/ou de la qualité des fonctions de la fonction technique, mises à disposition en dessous du seuil, plus particulièrement la fonction d'interaction avec les visiteurs.

13. Installation de domotique selon l'une des revendications précédentes, qui comprend en outre une station de logement dans laquelle l'interface utilisateur (7) est disposée.

14. Installation de domotique selon l'une des revendications précédentes, dans laquelle l'interface utilisateur (7) est une interface utilisateur graphique.

15. Installation de domotique selon l'une des revendications précédentes, dans laquelle la valeur seuil de température peut être réglée par l'intermédiaire d'un régulateur rotatif ou d'un curseur (10).
